(19) Europäisches Patentamt
European Patent Office
Office européen des brevets

(11) **EP 4 418 502 A1**

(12) **EUROPEAN PATENT APPLICATION**
published in accordance with Art. 153(4) EPC

(43) Date of publication:
**21.08.2024 Bulletin 2024/34**

(21) Application number: **22880574.3**

(22) Date of filing: **03.06.2022**

(51) International Patent Classification (IPC):
***H02K 3/34*** *(2006.01)*

(52) Cooperative Patent Classification (CPC):
**H02K 3/34**

(86) International application number:
**PCT/JP2022/022678**

(87) International publication number:
**WO 2023/062868 (20.04.2023 Gazette 2023/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.10.2021 JP 2021167711**

(71) Applicant: **Hitachi Industrial Equipment Systems
Co., Ltd.
Tokyo 101-0021 (JP)**

(72) Inventors:
• **TOKOI, Hirooki**
**Tokyo 100-8280 (JP)**
• **IKEDA, Kenji**
**Tokyo 100-8280 (JP)**
• **NAKAHARA, Mizuki**
**Tokyo 100-8280 (JP)**
• **HASEGAWA, Yu**
**Tokyo 100-8280 (JP)**
• **ENOMOTO, Yuji**
**Tokyo 100-8280 (JP)**
• **SAKAI, Toru**
**Tokyo 101-0021 (JP)**
• **AMAIKE, Masaru**
**Tokyo 101-0021 (JP)**
• **TAKAHASHI, Shuuichi**
**Tokyo 101-0021 (JP)**
• **YONEOKA, Yasuei**
**Tokyo 101-0021 (JP)**
• **MIKAMI, Hiroyuki**
**Tokyo 101-0021 (JP)**

(74) Representative: **MERH-IP Matias Erny Reichl
Hoffmann
Patentanwälte PartG mbB
Paul-Heyse-Strasse 29
80336 München (DE)**

(54) **ROTATING ELECTRIC MACHINE AND INDUSTRIAL MACHINE**

(57) A rotating electric machine including: a rotor (200); a stator core (110) having a slot (111) provided with an opening portion (112) on the rotor (200) side; a bobbin (150) that is fitted into the slot (111), and into which a coil (140) is inserted; a projecting portion (152) disposed on the opening portion (112) side in the bobbin (150); and a resin (160) fixing the stator core (110), the coil (140), and the bobbin (150) to each other.

FIG. 6

**EP 4 418 502 A1**

**Description**

Technical Field

The present invention relates to a rotating electric machine and an industrial machine.

Background Art

Demands for energy saving have been rising against the backdrop of global warming and the exhaustion of fossil fuels. Energy saving has been promoted also in rotating electric machines used in many fields of industrial machines, automobiles, household electric appliances, and the like, and a reduction in loss has been an important development challenge.

Suppressing a copper loss by reducing the resistance value of a coil is effective means for a reduction in loss. Accordingly, a rotating electric machine has been developed which suppresses the copper loss by using a rectangular wire, which can reduce the resistance value by increasing the cross-sectional area of the coil and increasing a ratio of the coil to the cross-sectional area of a slot of a stator core (space factor).

The rotating electric machine using this rectangular wire presents a problem in that distributed winding of the coil causes coil ends to be raised. However, a rotating electric machine has been disclosed in which the coil ends are lowered by connecting rectangular wires divided into predetermined segments to each other on the inside and outside of the slots of the stator core (for example, Patent Document 1).

Prior Art Document

Patent Document

Patent Document 1: PCT Patent Publication No. WO2020/017133

Summary of the Invention

Problem to be Solved by the Invention

However, the electric connection of a part in which the rectangular wires are connected to each other (connecting portion) may be weakened due to a Lorentz force, a vibration, a temperature change, or the like. Accordingly, the inventor(s) has conceived suppressing a weakening of the electric connection of the connecting portion by integrating the stator core and the coil with each other by a resin, and has fabricated a prototype. Then, it has been found that at a time of resin molding processing, the resin may weaken the electric connection of the connecting portion by intruding between the stator core and bobbins, pressing the bobbins, and deforming the coil within the bobbins.

It is an object of the present invention to provide a rotating electric machine that can suppress the intrusion of a resin between a stator core and bobbins at a time of resin molding processing.

Means for Solving the Problem

In order to achieve the above object, there is provided a rotating electric machine including: a rotor; a stator core having a slot provided with an opening portion on a side of the rotor; a bobbin that is fitted into the slot, and into which a coil is inserted; a projecting portion disposed on a side of the opening portion in the bobbin; and a resin that fixes the stator core, the coil, and the bobbin to each other.

Advantages of the Invention

According to the present invention, the intrusion of the resin between the stator core and the bobbin at a time of resin molding processing can be suppressed, so that a weakening of the electric connection of the connecting portion due to a deformation of the coil can be suppressed. Problems, configurations, and effects other than those described above will be made apparent by the following description of embodiments.

Brief Description of the Drawings

FIG. 1 is an external perspective view of a rotating electric machine according to a first embodiment of the present invention.

FIG. 2 is a perspective view of a stator according to the first embodiment of the present invention and a rotor disposed within the stator.

FIG. 3 is a perspective view in which a resin is removed from the stator depicted in FIG. 2.

FIG. 4 is a partial enlarged plan view of a stator core according to the first embodiment of the present invention.

FIG. 5 is an external perspective view of a bobbin according to the first embodiment of the present invention.

FIG. 6 is a partial sectional perspective view of the stator in which bobbins according to the first embodiment of the present invention are fitted in slots of the stator core.

FIG. 7 is a sectional view taken in the direction of arrows along a line A-A of FIG. 5.

FIG. 8 is an enlarged perspective view of an upper end of the bobbin according to the first embodiment of the present invention.

FIG. 9 is a sectional perspective view of the stator in which the bobbins according to the first embodiment of the present invention are fitted in the stator core, and a coil is wound in the stator core.

FIG. 10 is an enlarged perspective view depicting the shapes of one ends of two segment conductors according to the first embodiment of the present invention and the two segment conductors before being connected to each other (left side) and after being connected to each other (right side).

FIG. 11 is a sectional view of a molding die used for resin molding processing of the stator according to the first embodiment of the present invention and the stator placed in the molding die.

FIG. 12 is a fragmentary sectional view taken in the direction of arrows along a line A-A of FIG. 11.

FIG. 13 is an enlarged perspective view of an upper end of a bobbin according to a comparative example of the present invention.

FIG. 14 is a sectional view of a molding die used for resin molding processing of a stator according to the comparative example of the present invention and the stator placed in the molding die.

FIG. 15 is an enlarged view of an A part in FIG. 16.

FIG. 16 is a sectional view of the stator according to the comparative example of the present invention, the sectional view schematically depicting a pressure applied to the connecting portion of the coil when the liquid resin intrudes between a back yoke and a bobbin of the stator.

FIG. 17 is an enlarged view of a B part in FIG. 11.

FIG. 18 is an enlarged perspective view of an upper end of a bobbin according to a second embodiment of the present invention.

FIG. 19 is a partial plan view of a stator in which bobbins according to the second embodiment of the present invention are fitted in the slots of the stator core.

FIG. 20 is an external perspective view of a bobbin according to a third embodiment of the present invention.

FIG. 21 is a partial plan view of stator in which bobbins according to the third embodiment of the present invention are fitted in the slots of the stator core.

FIG. 22 is an enlarged perspective view of an upper end of a bobbin according to a fourth embodiment of the present invention.

FIG. 23 is an enlarged perspective view of an upper end of a bobbin according to a fifth embodiment of the present invention.

FIG. 24 is a partial plan view of a stator in which bobbins according to the fifth embodiment of the present invention are fitted in the slots of the stator core.

FIG. 25 is an external perspective view of a bobbin according to a sixth embodiment of the present invention.

FIG. 26 is a sectional view depicting a state in which a stator using bobbins according to the sixth embodiment of the present invention is placed in the molding die.

FIG. 27 is an enlarged view of an A part in FIG. 26.

FIG. 28 is a partial plan view of the stator according to the sixth embodiment of the present invention.

FIG. 29 is a partial enlarged plan view of a stator in which bobbins are fitted in a stator core according to another embodiment of the present invention.

Mode for Carrying Out the Invention

In the following, rotating electric machines 1000 according to a first to a sixth embodiment of the present invention will be described with reference to the drawings. Incidentally, in each figure, identical reference numerals denote identical parts.

[First Embodiment]

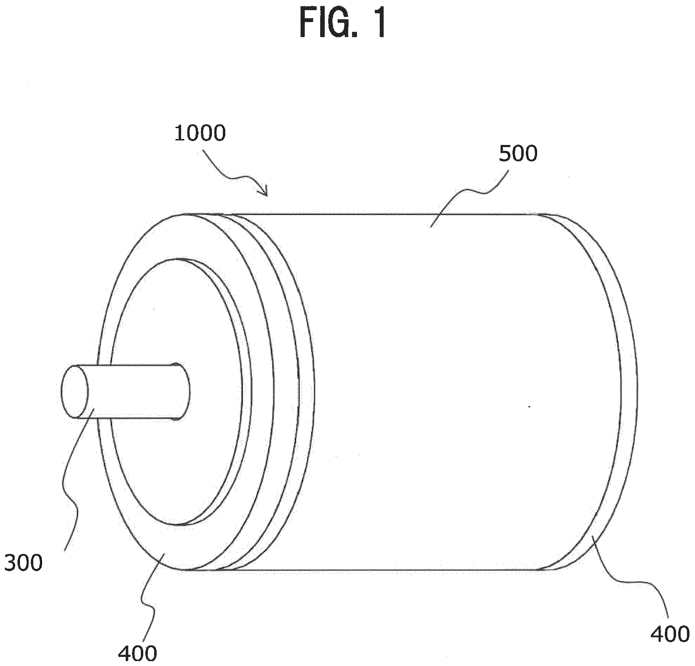

FIG. 1 is an external perspective view of a rotating electric machine 1000 according to a first embodiment of the present invention. The rotating electric machine 1000 is a motor that rotates a rotor by making a direct-current magnetic field generated by a permanent magnet within the rotor and a rotating magnetic field emitted from a coil attract and repel each other. For example, the rotating electric machine 1000 is a radial gap type motor used as a power source of a compressor.

The rotating electric machine 1000 includes a housing 500 in a cylindrical shape, end brackets 400 in a disk shape which end brackets are provided at both ends of the housing 500, and a shaft 300 that projects from the center of one of the end brackets 400.

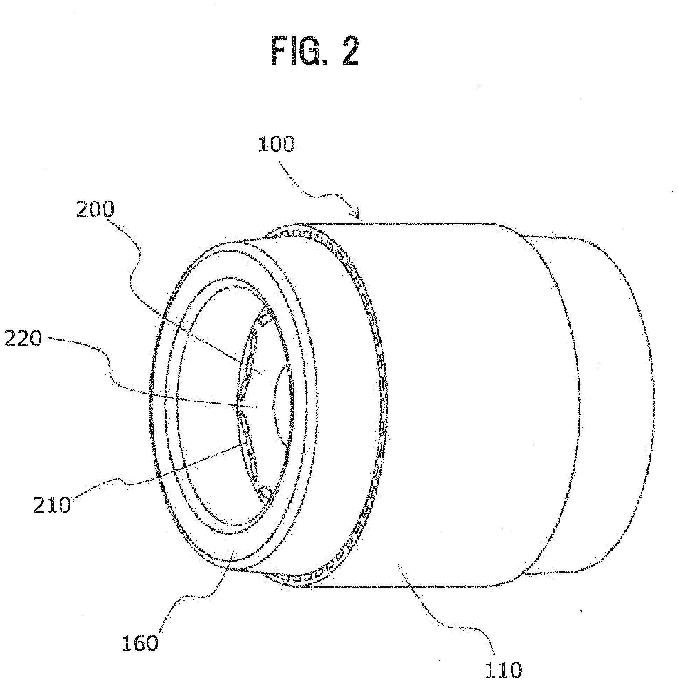

FIG. 2 is a perspective view of a stator 100 of the rotating electric machine 1000 according to the present embodiment and a rotor 200 disposed within the stator 100. That is, FIG. 2 depicts an internal structure of the rotating electric machine 1000 with the housing 500, the end brackets 400, and the shaft 300 removed from FIG. 1. The rotating electric machine 1000 includes the stator 100 in an annular shape and the rotor 200 disposed within the stator 100.

As depicted in FIG. 2, the stator 100 includes a stator core 110 and a resin 160 in a cylindrical shape which resin is provided on both sides in an axial direction of the stator core 110. The periphery of the stator core 110 is fixed to the housing 500 depicted in FIG. 1.

The rotor 200 includes a rotor core 220 in a cylindrical shape and a plurality of permanent magnets 210 arranged circumferentially within the rotor core 220. The shaft 300 depicted in FIG. 1 is provided at the central axis of the rotor 200. The shaft 300 is rotatably fixed to the end bracket 400 via a bearing not depicted.

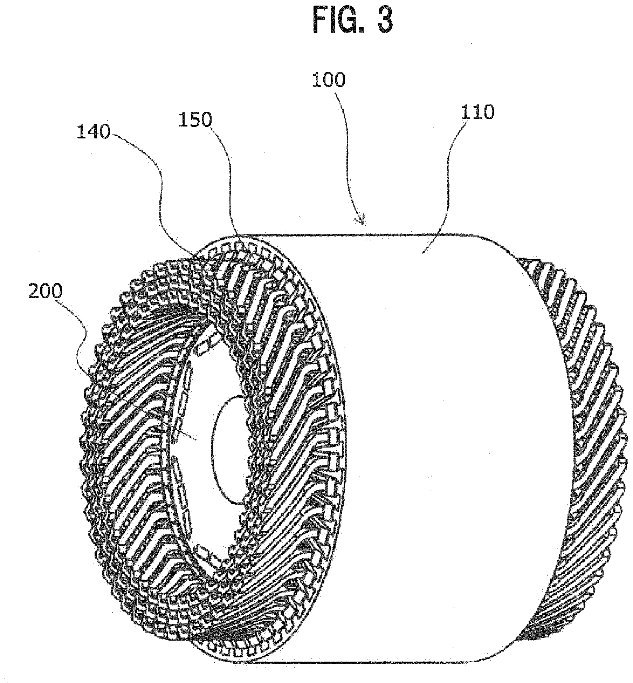

FIG. 3 is a perspective view in which the resin 160 is removed from the stator 100 depicted in FIG. 2. As depicted in FIG. 3, the stator 100 before resin molding processing includes the stator core 110, a coil 140, and bobbins 150. The coil 140 (for example, rectangular wire) is wound (for example, wave winding distributed winding) in the stator core 110 via the bobbins 150.

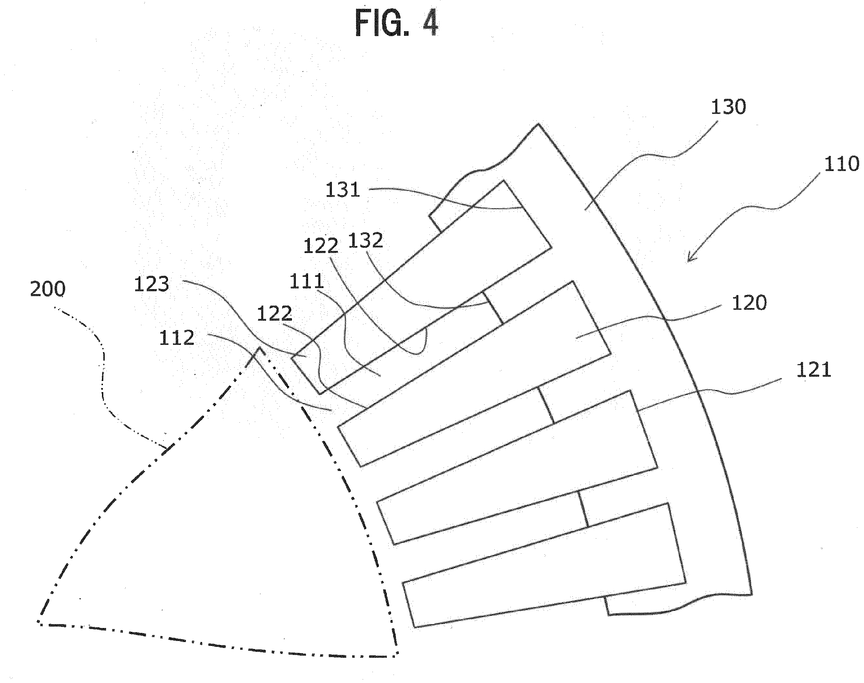

FIG. 4 is a partial enlarged plan view of the stator core 110 according to the present embodiment. The stator core 110 includes a back yoke 130 in an annular shape and a plurality of teeth 120 projecting from an inner circumferential surface of the back yoke 130 to the rotor 200 side and arranged at equal intervals in a circumferential direction.

The back yoke 130 is a cylindrical body obtained by laminating thin disks. The back yoke 130 has an inner wall 132 provided with a plurality of recessed portions 131 fitted with one ends of the teeth 120. The thin disks can be fabricated by, for example, stamping electromagnetic steel sheets by press working.

The teeth 120 are columnar bodies obtained by laminating trapezoidal thin plates. An end portion 121 on a base side of a tooth 120 is fitted into a recessed portion 131 of the back yoke 130. The tooth 120 is thereby coupled to the back yoke 130. The trapezoidal thin plates can be fabricated by processing thin plates of an iron-base amorphous metal, for example.

In addition, the stator core 110 has a plurality of slots 111 each sandwiched by the inner wall 132 of the back yoke 130 and side walls 122 of two teeth 120 adjacent to each other in the circumferential direction of the stator core 110 and provided with an opening portion 112 on the rotor 200 side.

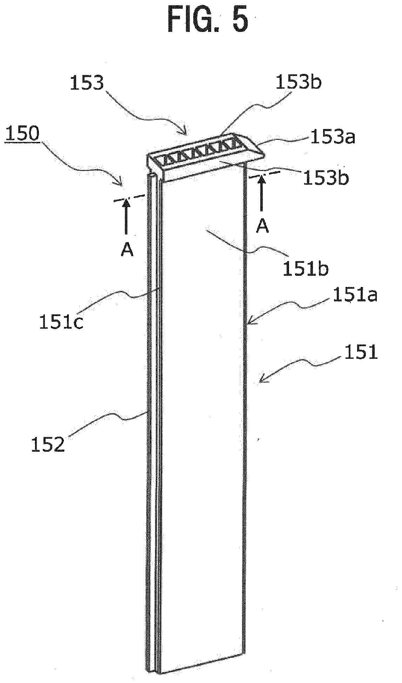

FIG. 5 is an external perspective view of a bobbin 150 according to the present embodiment. The bobbin 150 is a part that insulates the coil 140 and the stator core 110 from each other. The bobbin 150 has the coil 140 inserted therein, and has a plurality of coil insertion holes 154 (to be described later). The bobbin 150 is fitted into a slot 111. Usable as a material for the bobbin 150 is a resin, for example, a liquid crystal polymer (LCP) that has a high strength, is suitable for small thickness molding, and has a high heat resistance. As depicted in FIG. 5, the bobbin 150 is provided with a tubular portion 151, a projecting portion 152, and a flange portion 153.

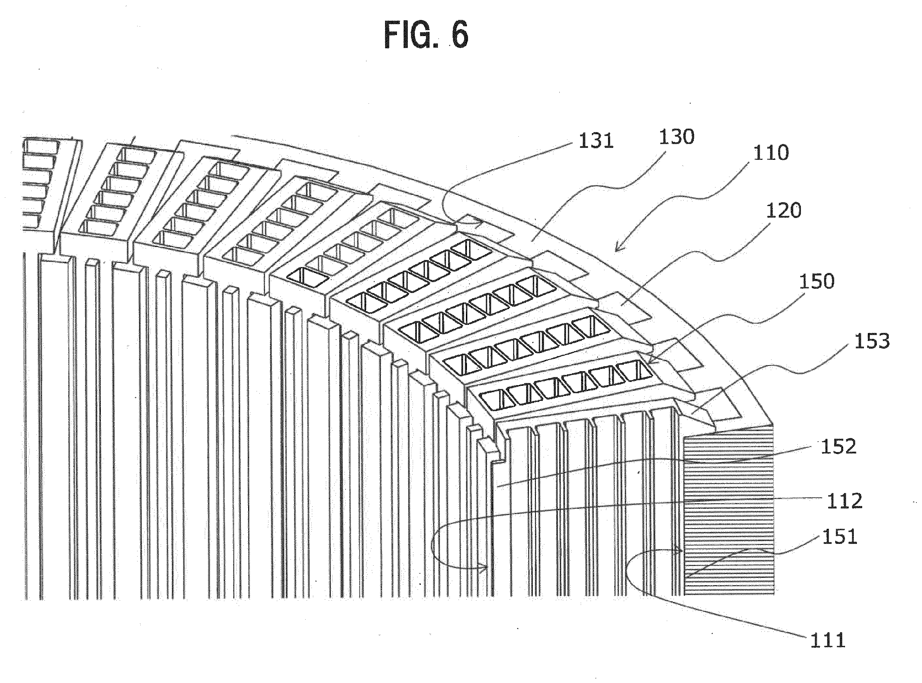

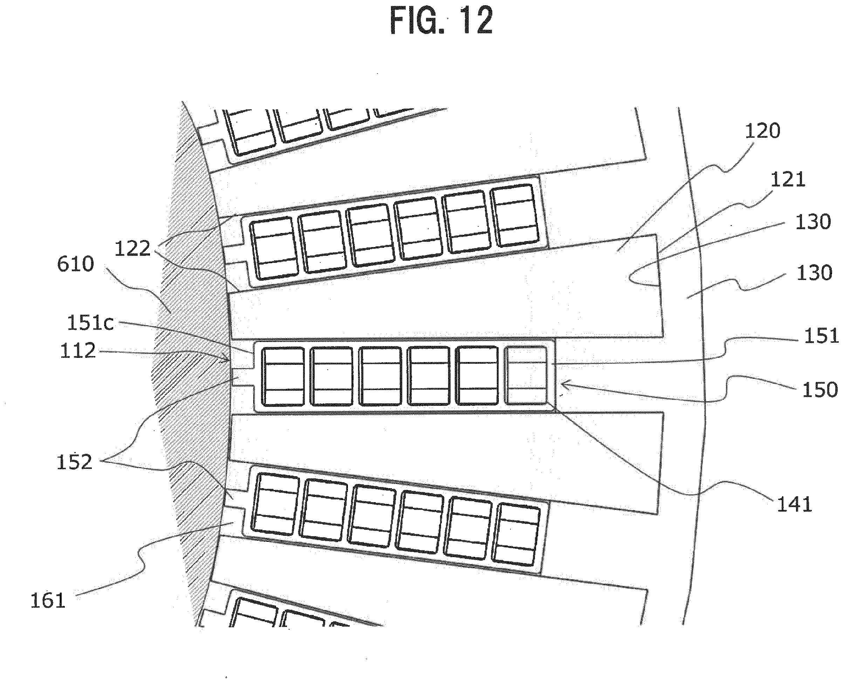

FIG. 6 is a partial sectional perspective view of the stator 100 in which the bobbins 150 according to the present embodiment are fitted in the slots 111 of the stator core 110. As depicted in FIG. 6, the tubular portion 151 is a part fitted to the slot 111, and the tubular portion 151 has three side walls facing inner walls of the slot 111 and one side wall facing the opening portion 112 of the slot 111. Specifically, the tubular portion 151 has a first side wall 151a along the inner wall 132 of the back yoke 130, two second side walls 151b along the side walls 122 of two teeth 120 adjacent to each other in the circumferential direction of the stator core 110, and a third side wall 151c facing the opening portion 112 (see FIGS. 4 and 5). Incidentally, an air gap is formed between the opening portion 112 and the side wall that faces the opening portion 112 (third side wall 151c). The air gap forms an axial direction flow passage 161 (see FIG. 12) through which a liquid resin 162 flows in the axial direction of the stator 100 at a time of resin molding processing.

The projecting portion 152 is a part that projects from the third side wall 151c to the rotor side (inward in the radial direction of the stator). In the present embodiment, the projecting portion 152 is a ridge that extends from one end to another end in the axial direction of the slot 111.

In addition, the flange portion 153 is a part that is provided to one of end portions in the axial direction of the tubular portion 151, and covers a clearance formed between the slot 111 and the tubular portion 151 from an end surface side in the axial direction of the stator core 110 (which end surface will hereinafter be referred to as a core end surface).

Specifically, the flange portion 153 includes: a back yoke side part 153a that covers a part of an end surface in the axial direction of the back yoke 130 located radially outward of the slot 111; and two tooth side parts 153b that cover parts of respective end surfaces in the axial direction of the two teeth 120 sandwiching the slot 111 from the circumferential direction. Incidentally, in the present embodiment., the flange portion 153 is provided to one of the end portions in the axial direction of the tubular portion 151. However, flange portions 153 may be provided to both ends in the axial direction of the tubular portion 151.

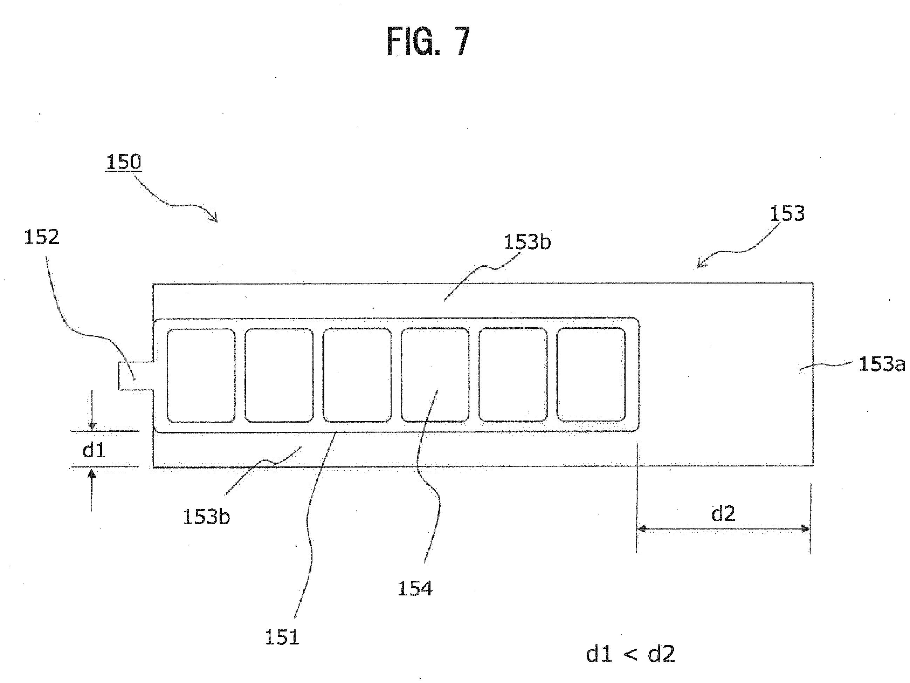

FIG. 7 is a sectional view taken in the direction of arrows along a line A-A of FIG. 5. As depicted in FIG. 7, a length d2 for which the back yoke side part 153a extends from the tubular portion 151 in the radial direction of the stator core 110 is longer than a length d1 for which each of the two tooth side parts 153b extends from the tubular portion 151 in the circumferential direction of the stator core 110.

In addition, as depicted in FIG. 6, the position of the bobbin 150 fitted in the slot 111 is determined in the axial direction of the stator core 110 by the abutting of the flange portion 153 against the stator core 110. Then, when the bobbin 150 is fitted into the slot 111, the clearance between the slot 111 and the tubular portion 151 is covered by the flange portion 153 from the outside in the axial direction of the stator core 110.

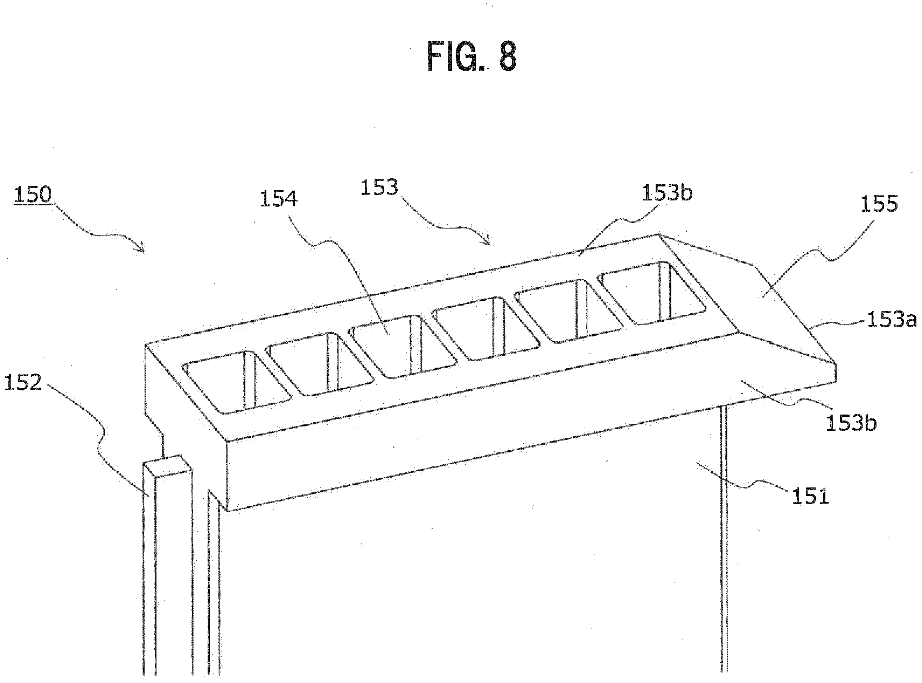

FIG. 8 is an enlarged perspective view of an upper end of the bobbin 150 accordingto the present embodiment. As depicted in FIG. 8, the upper end of the bobbin 150 is provided with a plurality of coil insertion holes 154 (six coil insertion holes 154 in the present embodiment) for the insertion of the coil 140 (rectangular wire in the present embodiment).

The coil insertion holes 154 reach a lower end of the bobbin 150, and thus penetrate the bobbin 150. Hence, the plurality of coil insertion holes 154 (six coil insertion holes 154 in the present embodiment) are provided within the tubular portion 151. Incidentally, because a rectangular wire is used as the coil 140 in the present embodiment, the coil insertion holes 154 are holes having a substantially rectangular sectional shape.

In addition, as depicted in FIG. 8, the outside in the axial direction of the back yoke side part 153a of the flange portion 153 forms a slope 155. The slope 155 has a rising gradient from the outside to the inside in the radial direction of the stator core 110 when the bobbin 150 is fitted in the slot 111.

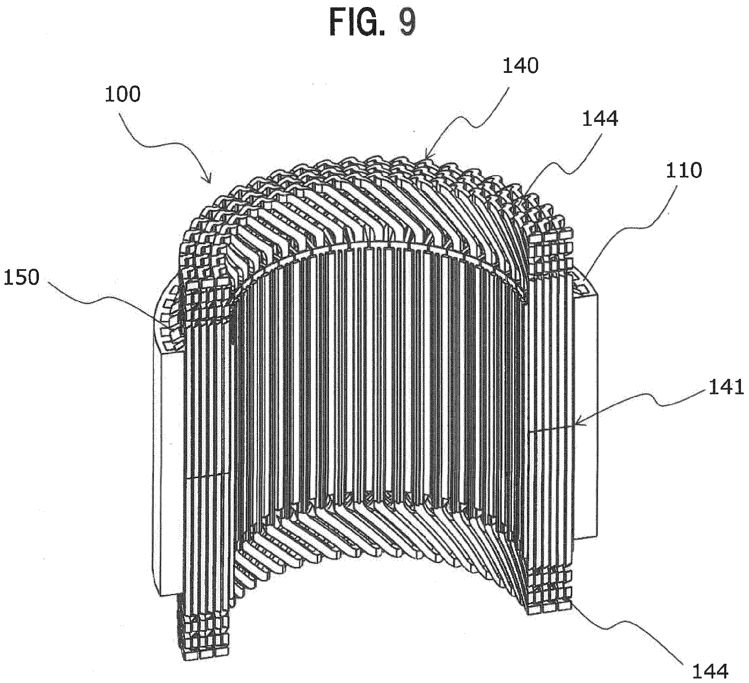

FIG. 9 is a sectional perspective view of the stator 100 having the coil 140 wound in the stator core 110 fitted with the bobbins 150 according to the present embodiment. As depicted in FIG. 9, the coil 140 has connecting portions 141 within the bobbins 150. That is, the coil 140 includes a first rectangular wire 142 and a second rectangular wire 143 (plurality of segment conductors), and the first rectangular wire 142 and the second rectangular wire 143 are connected to each other within the tubular portion 151 of a bobbin 150 fitted to the slot 111.

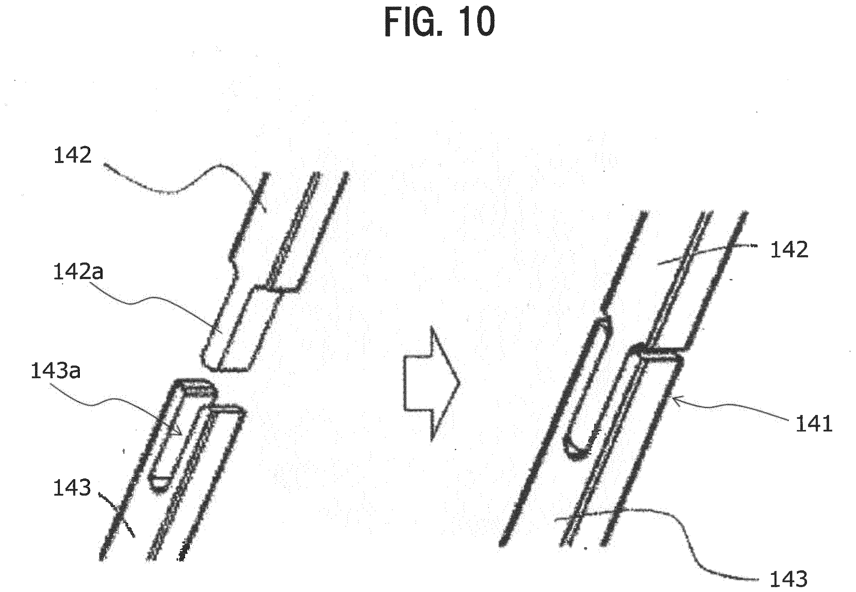

FIG. 10 is an enlarged perspective view depicting the shapes of one ends of two segment conductors (the first rectangular wire 142 and the second rectangular wire 143) according to the present embodiment and the two segment conductors before being connected to each other (left side) and after being connected to each other (right side).

The first rectangular wire 142 has a projecting portion 142a at one end thereof. The second rectangular wire 143 has a groove portion 143a at one end thereof. Each of the projecting portion 142a and the groove portion 143a has two faces substantially parallel with the axial direction of the conductors. The electric resistance of the connecting portion 141 can be reduced by connecting the two substantially parallel faces without a clearance. Hence, the first rectangular wire 142 and the second rectangular wire 143 are respectively inserted into the coil insertion hole 154 from opposite sides, and are coupled to each other within the tubular portion 151, such that the two faces of the projecting portion 142a and the two faces of the groove portion 143a, the faces being substantially parallel with the axial direction, are respectively superposed on each other.

In the stator 100 having the coil 140 wound (for example, wave winding distributed winding) in the stator core 110 via the bobbins 150, coil ends 144 (see FIG. 9) are covered by the resin 160, and the stator core 110, the coil 140, and the bobbins 150 are molded integrally and fixed to each other by the resin 160. Incidentally, the resin 160 according to the present embodiment is a resin molded by mold processing (for example, transfer mold processing). However, there is no limitation to this, but a varnish molded by vacuum-pressurized impregnation processing, for example, can also be used.

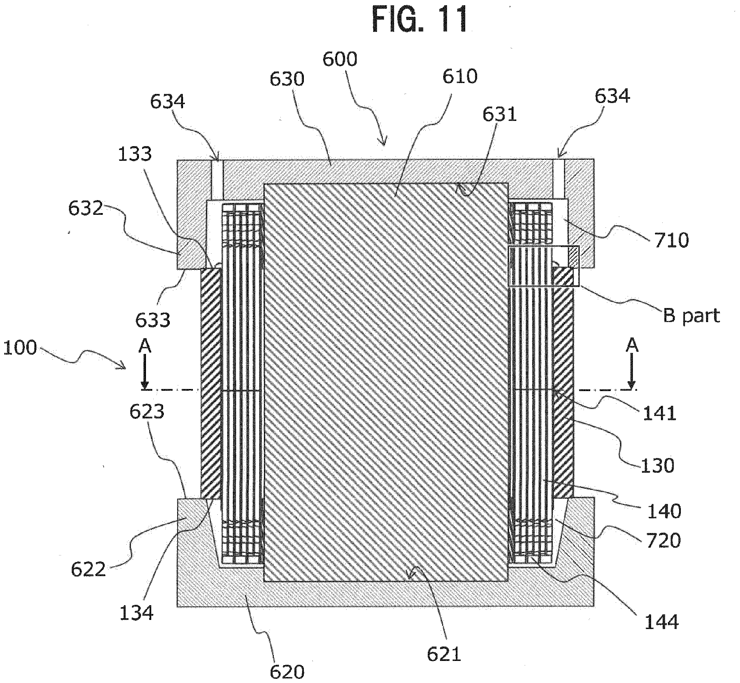

FIG. 11 is a sectional view of a molding die 600 used for resin molding processing of the stator 100 according to the present embodiment and the stator 100 placed in the molding die 600. The molding die 600 includes a core die 610 in a cylindrical shape and a lower die 620 and an upper die 630 in a disk shape, the lower die 620 and the upper die 630 having a cylindrical portion.

The core die 610 has a lower end thereof fitted in a circular hole 621 provided at the center of the lower die 620. The core die 610 is thus mounted on the lower die 620. Then, a hollow portion of the stator 100 is fitted onto the core die 610.

In the stator 100 fitted onto the core die 610, a radially outward part of a lower end surface 134 in the axial direction of the back yoke 130 abuts against a distal end surface 623 of a cylindrical portion 622 projecting upward from an outer circumferential portion of the lower die 620. The coil end 144 at a lower portion of the stator 100 is thereby covered by the lower die 620.

Then, an upper end portion of the core die 610 is fitted into a circular hole 631 of the upper die 630. The upper die 630 is thus mounted on the core die 610. An end surface 633 of a cylindrical portion 632 projecting downward from an outer circumferential portion of the upper die 630 mounted on the core die 610 abuts against a radially outward part of an end surface 133 on an upper side in the axial direction of the back yoke 130. The coil end 144 at an upper portion of the stator 100 is thereby covered by the upper die 630.

The stator 100 is fixed by being sandwiched between the lower die 620 and the upper die 630. A cavity (filling chamber) enclosed by the stator 100, the core die 610, and the lower die 620 or the upper die 630 is formed. Moreover, an upper cavity 710 formed by the stator 100, the core die 610, and the upper die 630 and a lower cavity 720 formed by the stator 100, the core die 610, and the lower die 620 communicate with each other through axial direction flow passages 161 depicted in FIG. 12.

An axial direction flow passage 161 is enclosed by the third side wall 151c of the tubular portion 151 of the bobbin 150, the side walls 122 in the circumferential direction of the two teeth 120 adjacent to each other, and an outer peripheral wall of the core die 610. It is to be noted that the projecting portion 152 of the bobbin 150 abuts against the outer peripheral wall of the core die 610, and that the bobbin 150 is thereby inhibited from moving radially inward within the slot 111 and closing the axial direction flow passage 161.

Then, the liquid resin 162 (for example, a thermosetting resin such as unsaturated polyester) is heated to 100 to 150°C, and is injected into the upper cavity 710 under a pressure of a few MPa from injection ports (gates) 634 provided in the upper die 630. The liquid resin 162 injected into the upper cavity 710 flows into the lower cavity 720 via the axial direction flow passages 161, and is filled into the upper cavity 710, the lower cavity 720, and the axial direction flow passages 161. In addition, at this time, the liquid resin 162 is filled also into the clearance formed between the recessed portion 131 of the back yoke 130 and the end portions 121 of the teeth 120.

The stator 100 and the molding die 600 in which the upper cavity 710, the lower cavity 720, and the axial direction flow passages 161 are filled with the liquid resin 162 are heated to cure the liquid resin 162. After the liquid resin 162 is cured, the stator 100 is removed from the molding die 600, and the stator 100 depicted in FIG. 2 is formed.

[Comparative Example]

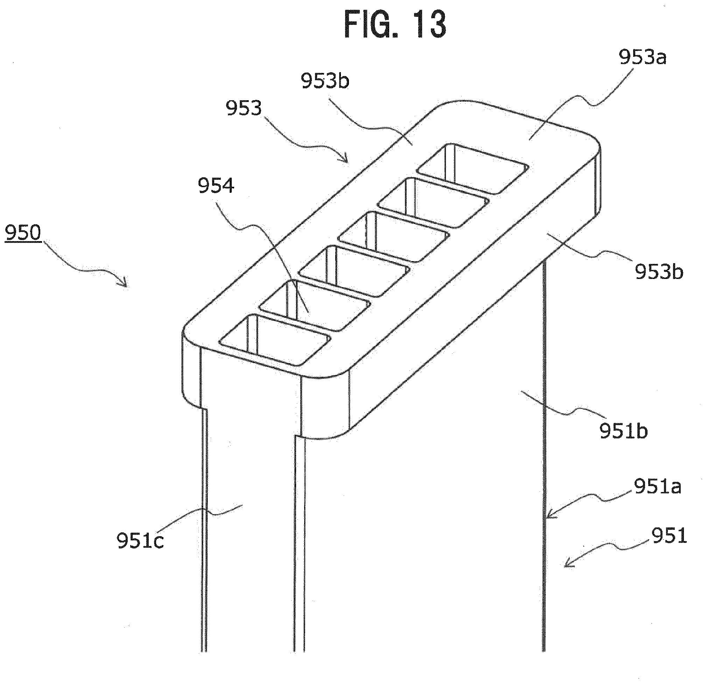

FIG. 13 is an enlarged perspective view of an upper end of a bobbin according to a comparative example. As depicted in FIG. 13, a third side wall 951c of a tubular portion 951 does not have the projecting portion 152, and a back yoke side part 953a of a flange portion 953 does not have the slope 155.

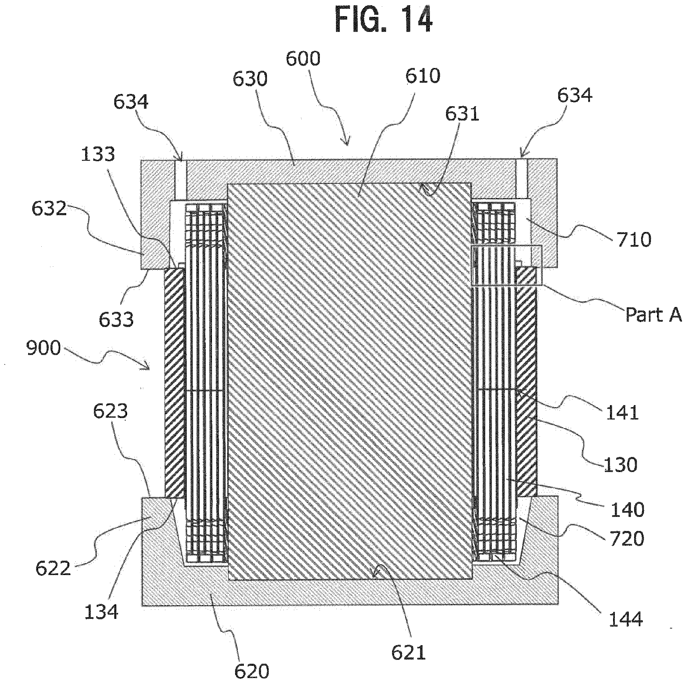

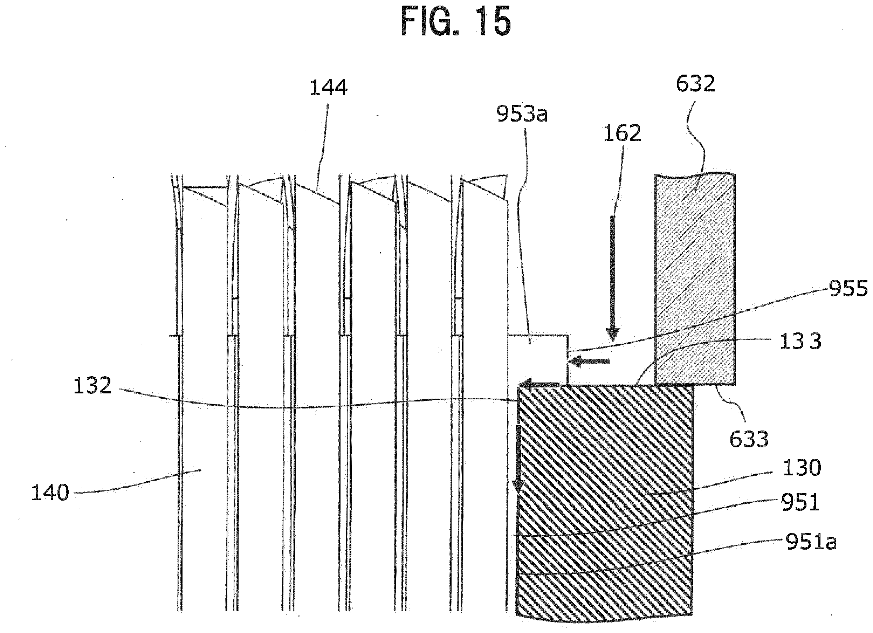

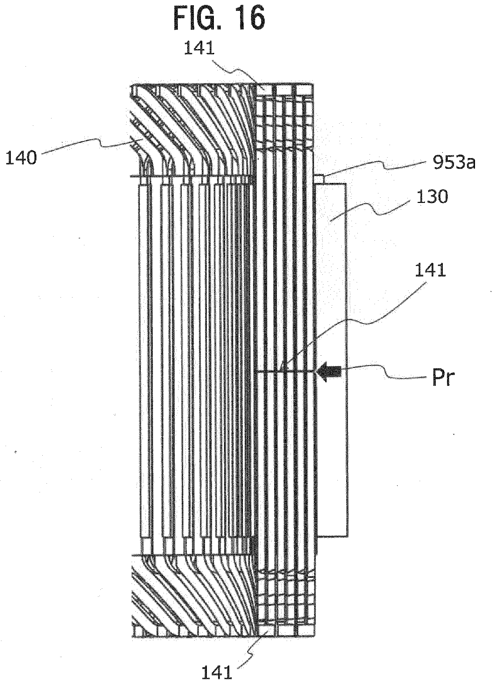

FIG. 14 is a sectional view of a molding die 600 used for resin molding processing of a stator 900 according to the comparative example of the present invention and the stator 900 placed in the molding die 600. FIG. 15 is an enlarged view of an A part in FIG. 14. In addition, FIG. 16 is a sectional view of the stator according to the comparative example of the present invention, the sectional view schematically depicting a pressure Pr applied to the connecting portion 141 of the coil 140 when the liquid resin 162 intrudes between the back yoke 130 and a bobbin 950 of the stator 900.

Also in the stator 900 according to the comparative example, as in the stator 100 according to the first embodiment of the present invention, the first rectangular wire 142 and the second rectangular wire. 143 are connected to each other within the slot 111, and the connecting portion 141 is included within the tubular portion 951 of the bobbin 950. Moreover, as depicted in FIG. 14, as with the stator 100 according to the first embodiment of the present invention, the stator 900 according to the comparative example is fixed to the molding die 600, and the liquid resin 162 is injected from the gates 634 of the upper die 630.

At this time, the bobbin 950 according to the comparative example does not have the projecting portion 152 on the third side wall 951c of the tubular portion 951, as depicted in FIG. 13. Therefore, the securing of the axial direction flow passage 161 through the abutment of the projecting portion 152 against the outer peripheral wall of the core die 610 as in FIG. 12 is not realized. Hence, when an end surface 955 of the back yoke side part 953a is pressed by the liquid resin 162, as depicted in FIG. 15, the tubular portion 951 may move in the direction of the core die 610 depicted in FIG. 14. When the tubular portion 951 moves in the direction of the core die 610, a clearance may be formed between a first side wall 951a and the inner wall 132 of the back yoke 130.

In addition, the liquid resin 162 is sufficiently heated, and is injected in a state of low viscosity. Therefore, the liquid resin 162 may intrude into a clearance between the first side wall 951a of the tubular portion 951 of the bobbin 950 and the inner wall 132 of the back yoke 130 from a clearance between the back yoke side part 953a of the flange portion 953 and the back yoke 130.

At both ends of the coil 140, the annular coil ends 144 specific to distributed winding are formed, and are restricted with regard to deformation in the radial direction. Therefore, when the liquid resin 162 intrudes between the tubular portion 951 and the back yoke 130, a radially inward pressing force Pr is applied only to the coil 140 within the slot 111. Consequently, when the connecting portion 141 is separated, or a contact area is decreased, an increase in contact resistance is invited, and there is a fear of causing local heat generation due to an increase in Joule loss and faults such as a melting or a loss of bobbins, conduction between the coil 140 and the stator core 110, and a ground fault.

[Effect]

The rotating electric machine 1000 according to the present invention is subjected to resin molding processing such that the stator core 110, the bobbins 150, and the coil 140 are integrated with each other by the resin 160 in order to suppress a weakening of electric connection of the connecting portion 141 of the coil 140. At a time of the resin molding processing, the core die 610 is placed in the hollow portion of the stator 100, and the upper die 630 and the lower die 620 covering the coil ends 144 sandwich the stator 100 from both sides in the axial direction. Then, the liquid resin 162 is injected from the gates 634 into the cavity (the filling chamber) formed between the core die 610, the upper die 630 or the lower die 620, and the stator 100. At this time, when the injected liquid resin 162 intrudes between the stator core 110 and the bobbin 950, the electric connection of the connecting portion 141 of the coil 140 may be weakened.

However, the rotating electric machine 1000 according to the present embodiment has the projecting portion 152 provided to the third side wall 151c of the bobbin 150. The projecting portion 152 abuts against the outer peripheral wall of the core die 610 placed in a hollow portion of the stator core 110 at the time of the resin molding processing, and prevents the bobbin 150 from moving toward the opening portion 112 (see FIG. 4) of the slot 111. It is therefore possible to prevent the formation of a clearance between the stator core 110 and the bobbin 150 through which clearance the liquid resin 162 intrudes easily.

That is, according to the present embodiment, the intrusion of the liquid resin 162 between the stator core 110 and the bobbin 150 at the time of the resin molding processing can be suppressed, so that a weakening of the electric connection of the connecting portion 141 due to a deformation of the coil 140 can be suppressed.

In addition, on the opening portion 112 side of the slot 111, the projecting portion 152 abuts against the core die 610, and thereby the axial direction flow passage 161 of the liquid resin 162 is formed on the periphery of the projecting portion 152 within the slot 111. Then, the liquid resin 162 flowing into the axial direction flow passage 161 during the resin molding processing presses the tubular portion 151 of the bobbin 150 against the inner wall 132 on the outside diameter side of the slot 111. That is, also from this aspect, the intrusion of the liquid resin 162 between the stator core 110 and the bobbin 150 can be suppressed, so that a weakening of the electric connection of the connecting portion 141 due to a deformation of the coil 140 can be suppressed.

In addition, the projecting portion 152 according to the present embodiment is a ridge that extends from one end to the other end in the axial direction of the slot 111. Therefore, the tubular portion 151 can be pressed against the inner wall 132 on the outside diameter side of the slot 111 over an extent from one end to the other end in the axial direction of the slot 111. Hence, the intrusion of the liquid resin 162 between the stator core 110 and the bobbin 150 can be further suppressed, so that a weakening of the electric connection of the connecting portion 141 due to a deformation of the coil 140 can be further suppressed.

In addition, the length d2 for which the back yoke side part 153a according to the present embodiment extends from the tubular portion 151 in the radial direction of the stator core 110 is longer than the length d1 for which each of the two tooth side parts 153b extends from the tubular portion 151 in the circumferential direction of the stator core 110. It is therefore possible. to suppress the intrusion of the liquid resin 162 between the inner wall 132 of the back yoke 130 and the first side wall 151a of the bobbin 150 from between the side walls 122 of the two teeth 120 adjacent to each other in the circumferential direction and the two second side walls 151b of the bobbin 150. Consequently, the bobbin 150 is prevented from moving inward in the radial direction within the slot 111 and forming a clearance between the back yoke side part (flange portion) and the stator core, and thereby the intrusion of the resin between the stator core and the bobbin can be suppressed, so that a weakening of the electric connection of the connecting portion due to a deformation of the coil can be suppressed.

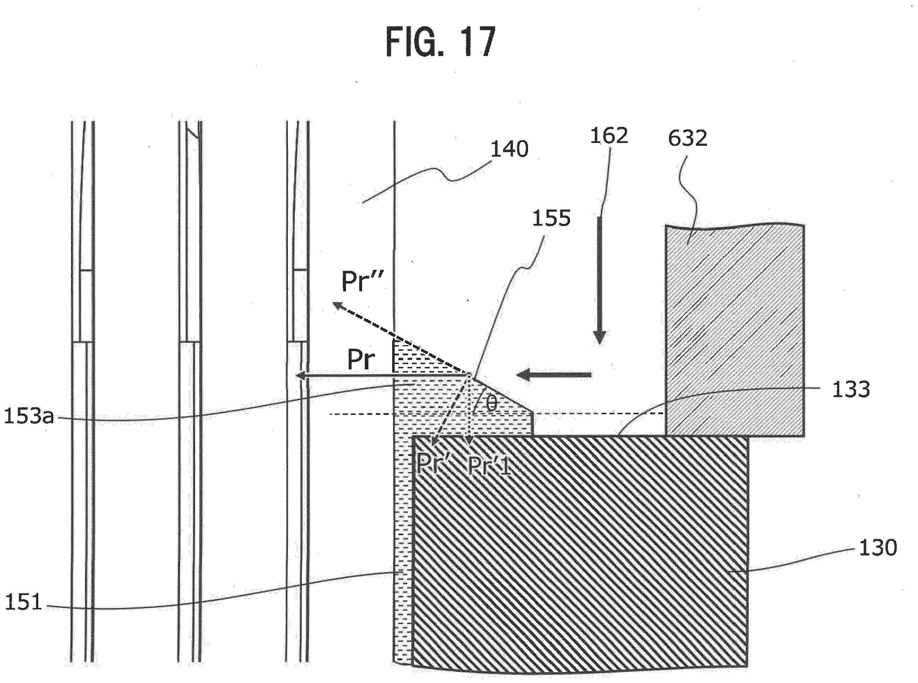

In addition, the face 155 on the outside in the axial direction of the back yoke side part 153a provided to the flange portion 153 of the bobbin 150 according to the present embodiment is a slope with a rising gradient from the outside to the inside in the radial direction of the stator core 110. Therefore, as depicted in FIG. 17, a pressure Pr with which the liquid resin 162 presses the back yoke side part 153a of the flange portion 153 from the outside in the radial direction can be decomposed into a pressure Pr' perpendicular to the slope 155 and a pressure Pr" horizontal to the slope 155. Further, the pressure Pr' perpendicular to the slope 155 can be decomposed into a pressure Pr'1 perpendicular to the end surface 133 of the back yoke 130 and a pressure Pr"2 (not depicted) horizontal to the end surface 133.

Incidentally, letting $\theta°$ be an angle of the slope 155 with respect to the end surface 133. of the back yoke 130, the following expressions can be made:

$$Pr' = Pr \cdot \sin\theta$$

$$Pr'1 = Pr' \cdot \cos\theta = Pr \cdot \sin\theta \cdot \cos\theta$$

Hence, when the face 155 on the outside in the axial direction of the back yoke side part 153a is inclined, the pressure Pr'1 perpendicular to the end surface 133 of the back yoke 130 is generated at the back yoke side part 153a of the flange portion 153. Therefore, a surface of the back yoke side part 153a which surface faces the back yoke is pressed against the back yoke. The-formation of a clearance between the back yoke side part 153a (flange portion) and the stator core 110 is thereby prevented. Hence, the intrusion of the resin 160 between the stator core 110 and the bobbin 150 can be suppressed, so that a weakening of the electric connection of the connecting portion 141 due to a deformation of the coil 140 can be suppressed.

In addition, an intra-slot connection system is adopted in which the coil 140 according to the present embodiment includes a plurality of segment conductors, and the plurality of segment conductors are connected to each other within the tubular portion 151 of the bobbin 150 fitted in the slot 111. Therefore, as compared with a coil end connection system in which the coil is connected at the coil ends of the coil by welding, a need for bending processing and welding at the coil ends is obviated. It is therefore possible to achieve higher production and miniaturization of the rotating electric machine.

In addition, the plurality of segment conductors of the coil 140 include the first rectangular wire 142 having the projecting portion 142a at one end thereof, the second rectangular wire 143 having the groove portion 143a at one end thereof, and the connecting portion 141 in which the projecting portion 142a is fitted to the groove portion 143a. Therefore, the projecting portion 142a and the groove portion 143a are fitted to each other by merely pushing the projecting portion 142a into the groove portion 143a, and the projecting portion 142a and the groove portion 143a (that is, the first rectangular wire 142 and the second rectangular wire 143) can be easily connected to each other.

In addition, the stator core 110 includes: a recessed portion 131 provided to the inner circumferential surface of the back yoke 130 in a cylindrical shape and extending in the axial direction of the back yoke 130; and a tooth 120 having the end portion 121 fitted in the recessed portion 131. The liquid resin 162 (resin 160) is filled into a clearance in the radial direction which clearance is formed between the recessed portion 131 and the end portion 121 of the tooth 120.

In the thus formed stator core 110, the tooth 120 is pressed inward in the radial direction, so that a clearance in the circumferential direction which clearance is formed between the recessed portion 131 of the back yoke 130 and the end portion 121 of the tooth 120 fitted in the recessed portion 131 can be made smaller than a clearance therebetween in the radial direction. Therefore, a magnetic flux flowing within the tooth 120 from another end 123 of the tooth 120 to the end portion 121 flows from the end portion 121 of the tooth 120 to the recessed portion 131 of the back yoke 130 in the circumferential direction. Consequently, a flow of the magnetic flux to the outside diameter side of the back yoke 130 can be suppressed, so that an iron loss occurring in the back yoke 130 can be reduced. Particularly because the tooth 120 in the present embodiment is a trapezoidal column that can be formed by an amorphous metal, the iron loss can be further reduced.

In addition, the rotating electric machine 1000 according to the present embodiment can be used as a power source of a compressor. The compressor using the low-loss rotating electric machine 1000 according to the present embodiment as a power source thereof can achieve an energy saving.

(Second Embodiment)

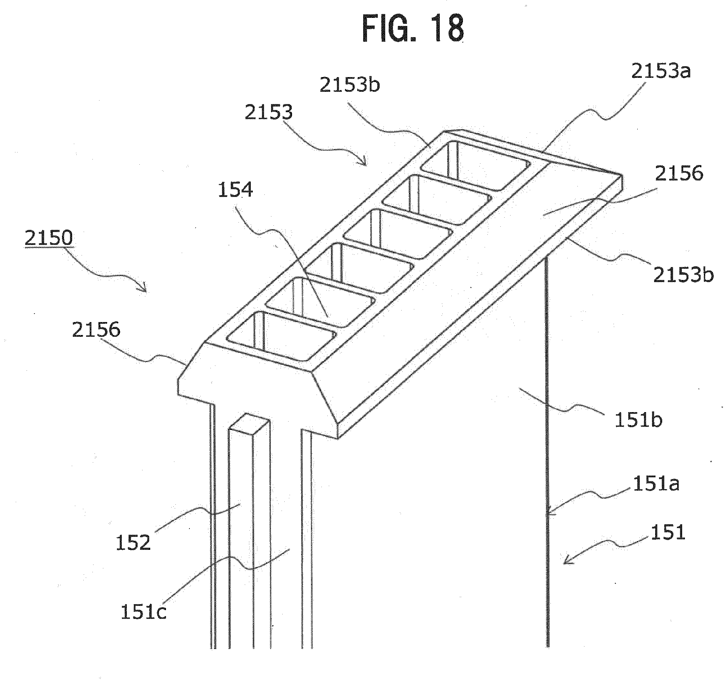

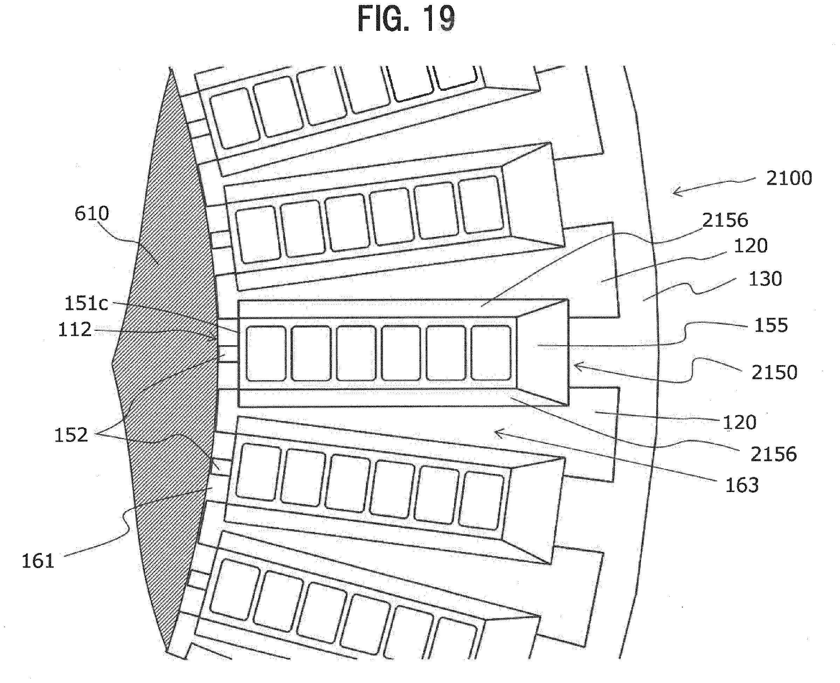

FIG. 18 is an enlarged perspective view of an upper end of the bobbin 2150 according to the second embodiment of the present invention. In addition, FIG. 19 is a partial plan view depicting a state in which bobbins 2150 according to the second embodiment of the present invention are fitted to the slots 111 of the stator core 110.

The bobbin 2150 according to the present embodiment is different from the bobbin 150 according to the first embodiment in the following respects. Specifically, a face 2156 on the outside in the axial direction of each of two tooth side parts 2153b of a flange portion 2153 of the bobbin 2150 is a slope with a rising gradient from an end surface in the axial direction of the teeth 120 to the slot 111.

FIG. 19 is a partial plan view of the stator 100 in which the bobbins 2150 according to the present embodiment are fitted in the slots 111 of the stator core 110. Because the face 2156 on the outside in the axial direction of each of the tooth side parts 2153b (see FIG. 18) of the flange portion 2153 is a slope, the width of radial direction flow passages 163 on the teeth 120 in the circumferential direction of a stator 2100 is increased on an upper side, and the flow passage sectional area of the radial direction flow passages 163 is increased on the upper side.

[Effect]

A part of the liquid resin 162 injected from the gates 634 flows to the axial direction flow passages 161 on the inside in the radial direction along the end surfaces in the axial direction of the teeth 120. At this time, because the face 2156 on the outside in the axial direction of each of the tooth side parts 2153b of the flange portion 2153 is a slope, the width of the radial direction flow passages 163 on the teeth 120 in the circumferential direction of the stator 2100 is increased on the upper side, and the flow passage cross-sectional area of the radial direction flow passages 163 is increased on the upper side. Therefore, a pressure loss (friction loss) when the liquid resin 162 flows through the radial direction flow passages 163 can be reduced, so that the liquid resin 162 flows to the axial direction flow passage 161 easily. It is thereby possible to suppress a decrease in the strength of the resin 160 due to a molding defect such as voids (air bubbles) or a decrease in density. In addition, it is possible to reduce a molding pressure for filling the cavities 710 and 720 with the liquid resin 162 at a predetermined density, and therefore suppress a deformation of the coil 140 or the like due to the pressing force of the liquid resin 162. Consequently, a weakening of the electric connection of the connecting portion due to a deformation of the coil 140 can be suppressed.

In addition, the liquid resin 162 filled into the upper cavity 710 presses the slopes 2156 of the two tooth side parts 2153b of the flange portion 2153 of the bobbin 2150. Forces perpendicular to the slopes 2156 are generated at the tooth side parts 2153b having the slopes 2156 pressed by the liquid resin 162, so that surfaces of the tooth side parts 2153b which surfaces face the end surfaces in the axial direction of the teeth 120 are pressed against the end surfaces in the axial direction of the teeth 120. Therefore, a movement of the bobbin 2150 in the radial direction is suppressed. It is thereby possible to suppress the formation of a clearance between the tubular portion 151 of the bobbin 2150 and the inner wall of the slot 111 of the stator core 110. Hence, the intrusion of the liquid resin 162 between the stator core 110 and the bobbin 2150 can be suppressed, so that a weakening of the electric connection of the connecting portion due to a deformation of the coil 140 can be suppressed.

(Third Embodiment)

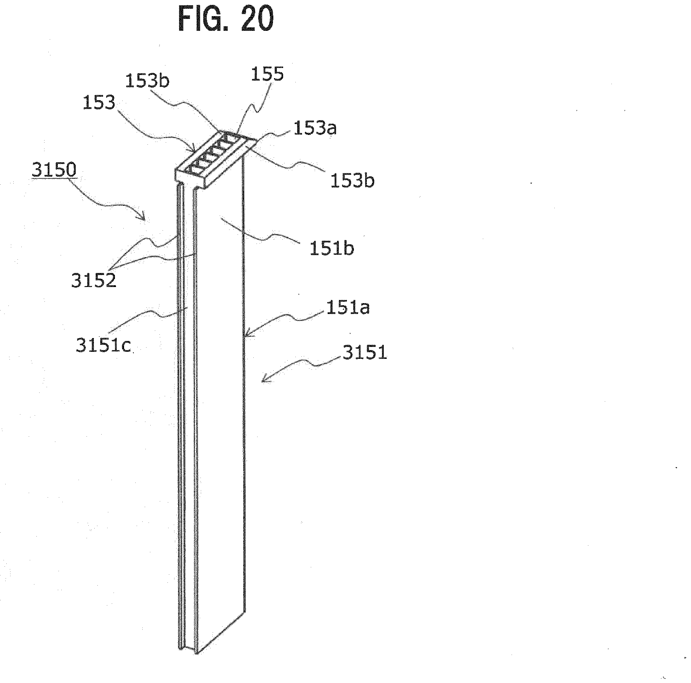

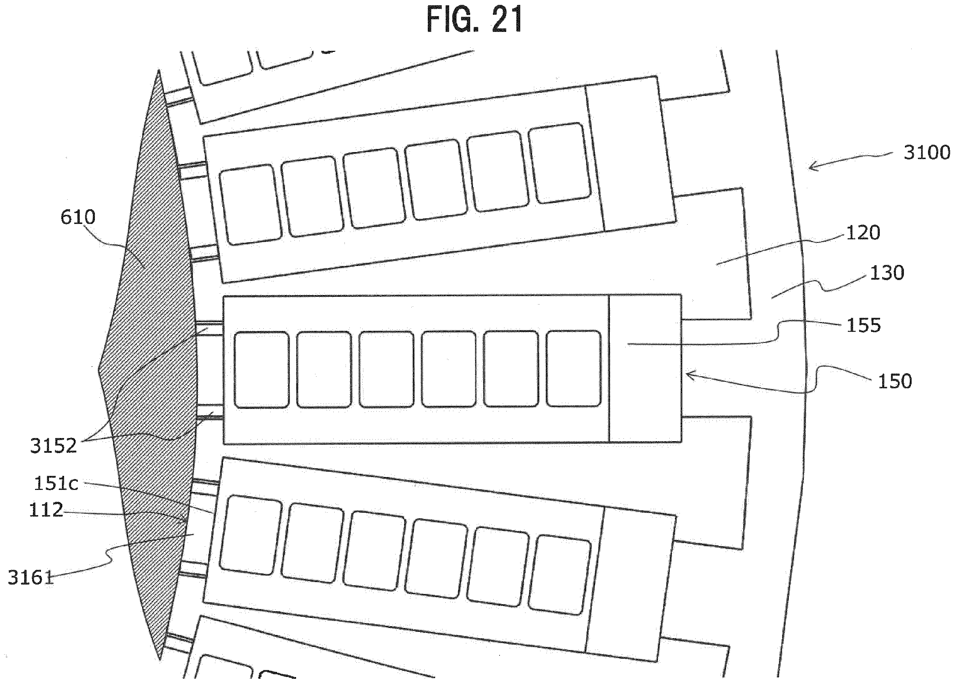

FIG. 20 is an external perspective view of a bobbin 3150 according to a third embodiment of the present invention. FIG. 21 is a partial plan view of a stator 3100 in which bobbins 3150 according to the third embodiment of the present invention are fitted in the slots 111 of the stator core 110.

The bobbin 3150 according to the present embodiment is different from the bobbin 150 according to the first embodiment in terms of projecting portions 3152. Specifically, the projecting portion 152 according to the first embodiment is one ridge that projects from the third side wall 151c facing the opening portion 112 of the tubular portion 151, and extends from one end to another end in the axial direction of the slot 111. On the other hand, the projecting portions 3152 according to the present embodiment are two ridges that project from the third side wall 151c and extend along the side walls 122 (see FIG. 4) of the two teeth 120 sandwiching the slot 111.

[Effect]

The projecting portions 3152 of the bobbin 3150 according to the present embodiment are two ridges that extend along the side surfaces of the two teeth 120 sandwiching the slot 111. Therefore, an axial direction flow passage 3161 is one flow passage having a larger cross-sectional area than the axial direction flow passage 161 according to the first embodiment which flow passage is divided into two by the projecting portion 152. Therefore, the liquid resin 162 flows through the axial direction flow passage 3161 easily. It is consequently possible to suppress a decrease in the strength of the resin 160 due to a molding defect such as voids (air bubbles) or a decrease in density. In addition, it is possible to reduce a molding pressure for filling the cavities 710 and 720 with the liquid resin 162 at a predetermined density, and therefore suppress a deformation of the coil 140 or the like due to the pressing force of the liquid resin 162. Consequently, a weakening of the electric connection of the connecting portion due to a deformation of the coil can be suppressed.

(Fourth Embodiment)

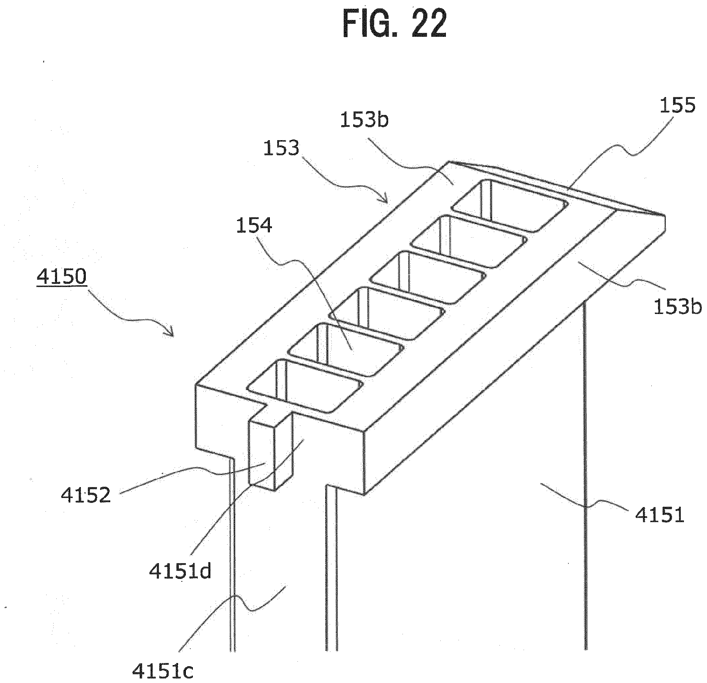

FIG. 22 is an enlarged perspective view of an upper end of a bobbin 4150 according to a fourth embodiment of the present invention. The bobbin 4150 according to the present embodiment is different from the bobbin 150 according to the first embodiment in terms of the shape and position of a projecting portion 4152.

Specifically, the projecting portion 152 according to the first embodiment is one ridge that projects from the third side wall 151c facing the opening portion 112 of the tubular portion 151, and extends from one end to another end in the axial direction of the slot 111. On the other hand, the projecting portion 4152 according to the present embodiment is a projection provided to an external wall 4151d on the opening portion 112 side in a flange portion 4153.

[Effect]

The projecting portion 4152 according to the present embodiment is a projection provided to the external wall 4151d on the opening portion 112 side in the flange portion 4153. Therefore, an axial direction flow passage 4161 is not divided into two in the axial direction by the projecting portion 152 unlike the axial direction flow passage 161 according to the first embodiment, but includes one flow passage having a large cross-sectional area. Hence, a pressure loss (friction loss) caused by the flow passage can be reduced, so that the liquid resin 162 flows through the axial direction flow passage 3161 easily. It is thereby possible to suppress a decrease in the strength of the resin 160 due to a molding defect such as voids (air bubbles) or a decrease in density. In addition, it is possible to reduce a molding pressure for filling the cavities 710 and 720 with the liquid resin 162 at a predetermined density, and therefore suppress a deformation of the coil 140 or the like due to the pressing force of the liquid resin 162. Consequently, a weakening of the electric connection of the connecting portion due to a deformation of the coil can be suppressed. Further, because the shape of the bobbin 4150 can be simplified, moldability can be improved.

In addition, when the stator is placed in the molding die 600 in order to perform the resin molding processing, the projecting portion 4152 abuts against the core die 610. Thus, even when the liquid resin 162 is injected from the gates 634, the bobbin 4150 cannot move inward in the radial direction. Meanwhile, the liquid resin 162 intrudes into the axial direction flow passage 161, so that the bobbin 4150 is pressed outward in the radial direction. Hence, the intrusion of the liquid resin 162 between the stator core 110 and the bobbin 4150 can be suppressed, so that a weakening of the electric connection of the connecting portion 141 due to a deformation of the coil 140 can be suppressed.

(Fifth Embodiment)

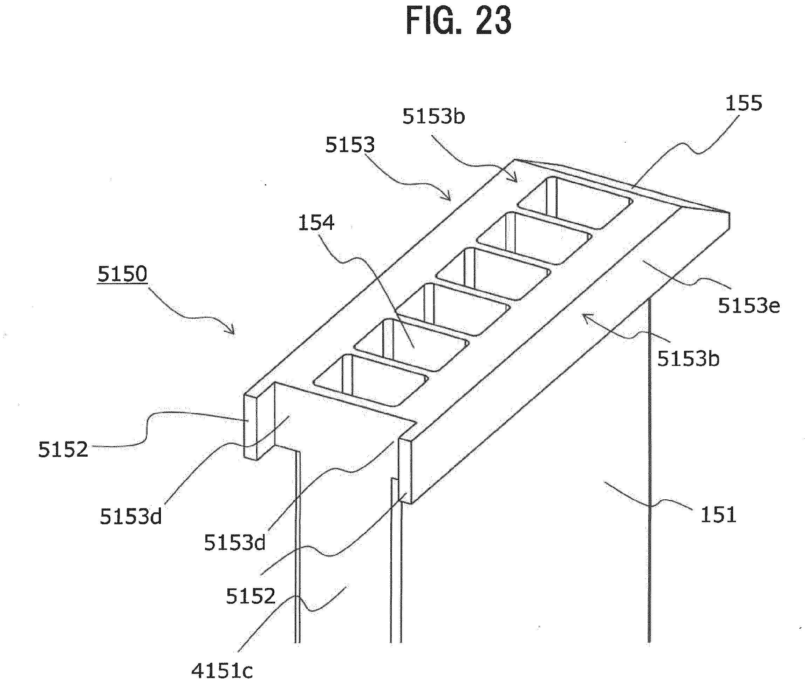

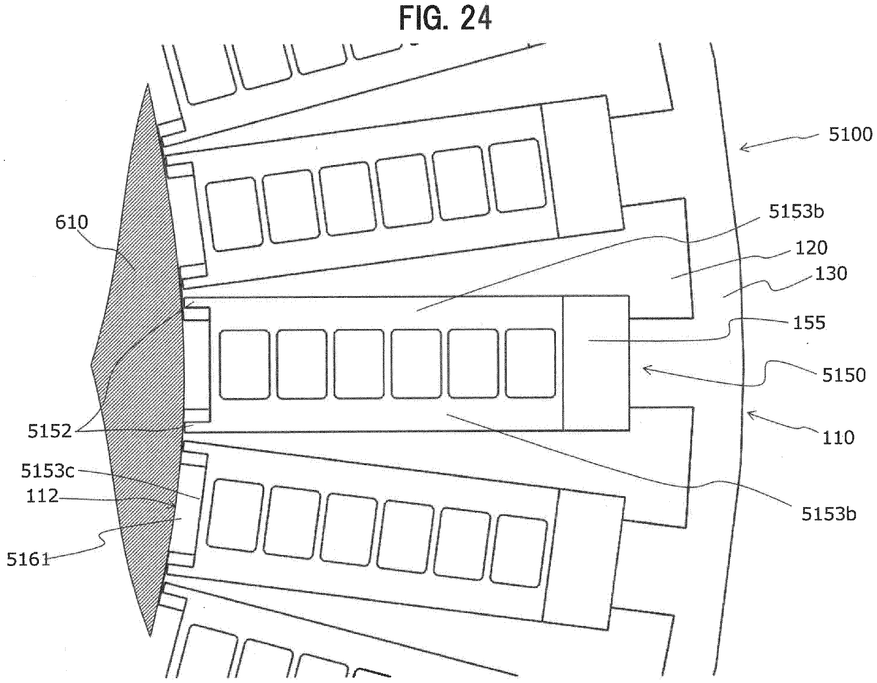

FIG. 23 is an enlarged perspective view of an upper end of a bobbin 5150 according to a fifth embodiment of the present invention. In addition, FIG. 24 is a partial plan view of a stator 5100 in which bobbins 5150 according to the fifth embodiment of the present invention are fitted in the slots 111 of the stator core 110.

The bobbin 5150 according to the present embodiment is different from the bobbin 4150 according to the fourth embodiment in terms of positions at which projecting portions 5152 are provided and the number thereof. Specifically, in the fourth embodiment, one projecting portion 4152 is provided to the external wall 4151d on the opening portion 112 side in the flange portion 4153. On the other hand, in the present embodiment, the projecting portions 5152 are provided to external walls 5153d on the opening portion 112 side in two respective.tooth side parts 5153b of a flange portion 5153. That is, one projecting portion 4152 according to the fourth embodiment is provided to the external wall 4151d of the flange portion 4153. On the other hand, a total of two projecting portions 5152 according to the fifth embodiment are provided, one to each of the external walls 5153d of the two tooth side parts 5153b of the flange portion 5153.

Incidentally, the projecting portions 5152 may be two ridges that are located at both ends of the flange portion 5153 in the circumferential direction of the stator core 110, and project radially inward of the stator core 110.

[Effect]

The projecting portions 5152 according to the present embodiment are provided to the external walls 5153d on the inside in the radial direction of the stator core 110 in the two respective tooth side parts 5153b of the flange portion 5153. Therefore, base portions are thick, thus enabling rigidity to be increased, and the base portions can be molded easily.

In addition, the projecting portions 5152 are provided to the two tooth side parts 5153b that cover parts of the end surfaces in the axial direction of the two respective teeth 120 sandwiching the slot 111 from the circumferential direction. Therefore, the inlet of an axial direction flow passage 5161 is not divided into two unlike the projecting portion 4152 according to the fourth embodiment. In particular, in a case where the projecting portions 5152 are two ridges that are located at both ends of the flange portion 5153 in the circumferential direction of the stator core 110, and project radially inward of the stator core 110, the inlet of the axial direction flow passage 5161 can be opened wide, as depicted in FIG. 24. Therefore, the liquid resin 162 flows into the axial direction flow passage 5161 easily. Hence, a pressure loss (friction loss) caused by the flow passage can be further reduced, so that the liquid resin 162 flows through the axial direction flow passage 5161 easily. It is thereby possible to suppress a decrease in the strength of the resin 160 due to a molding defect such as voids (air bubbles) or a decrease in density. In addition, it is possible to reduce a molding pressure for filling the cavities 710 and 720 with the liquid resin 162 at a predetermined density, and therefore suppress a deformation of the coil 140 or the like due to the pressing force of the liquid resin 162. Consequently, a weakening of the electric connection of the connecting portion due to a deformation of the coil can be suppressed. Further, because the shape of the bobbin 4150 can be simplified, moldability can be improved.

In addition, when the stator 100 is placed in the molding die 600 in order to perform the resin molding processing, the projecting portions 5152 abut against the core die 610. Thus, even when the liquid resin 162 is injected from the gates 634, the bobbin 5150 cannot move inward in the radial direction. Meanwhile, the liquid resin 162 intrudes into the axial direction flow passage 5161, so that the bobbin 5150 is pressed outward in the radial direction. Hence, the intrusion of the liquid resin 162 between the stator core 110 and the bobbin 5150 can be suppressed, so that a weakening of the electric connection of the connecting portion 141 due to a deformation of the coil 140 can be suppressed.

(Sixth Embodiment)

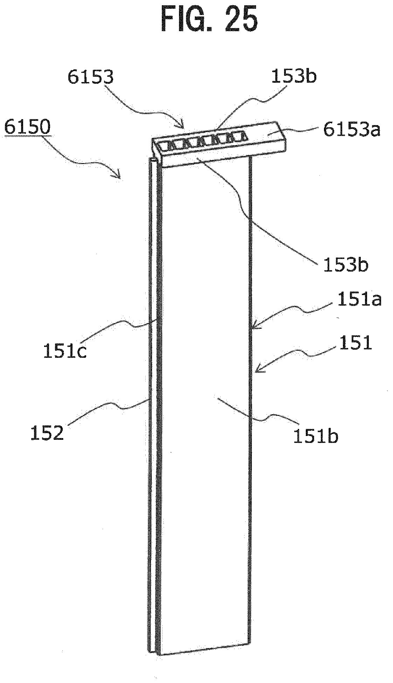

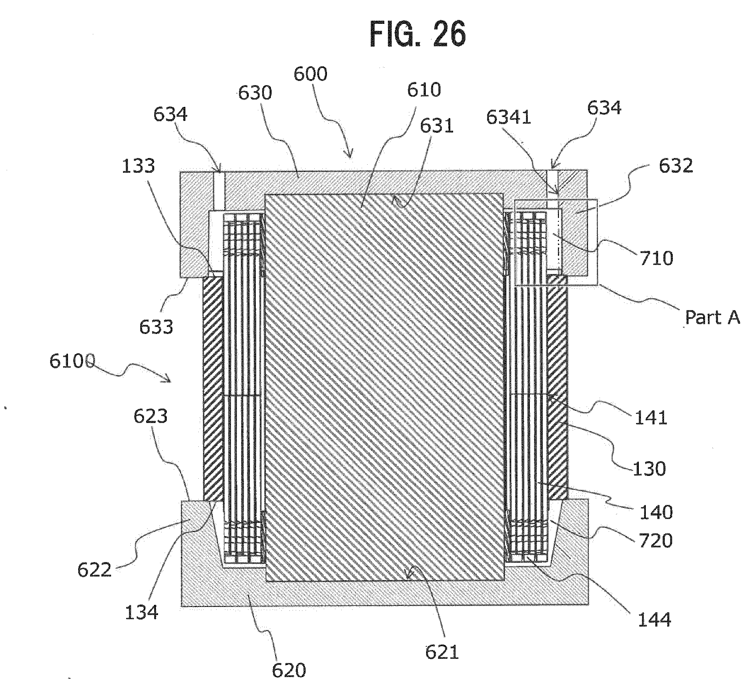

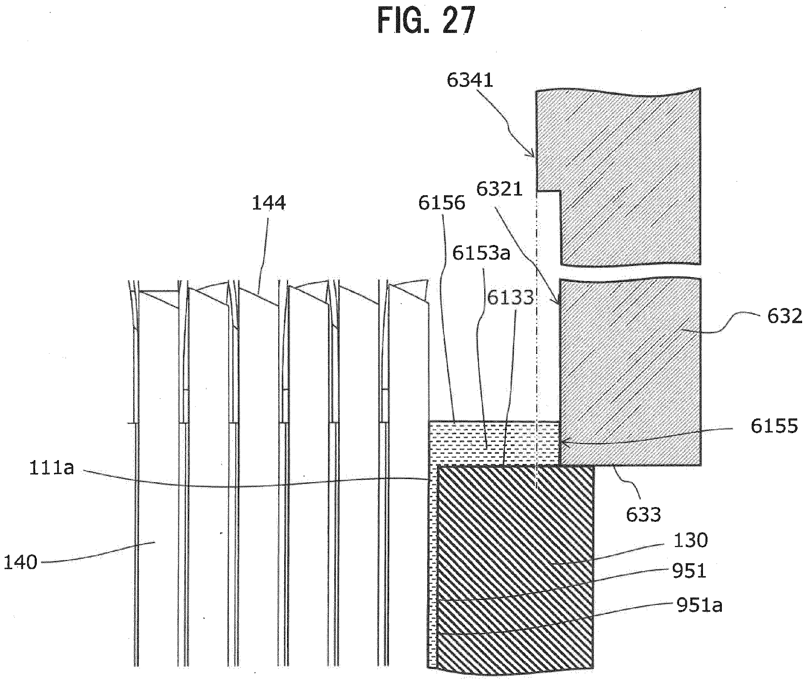

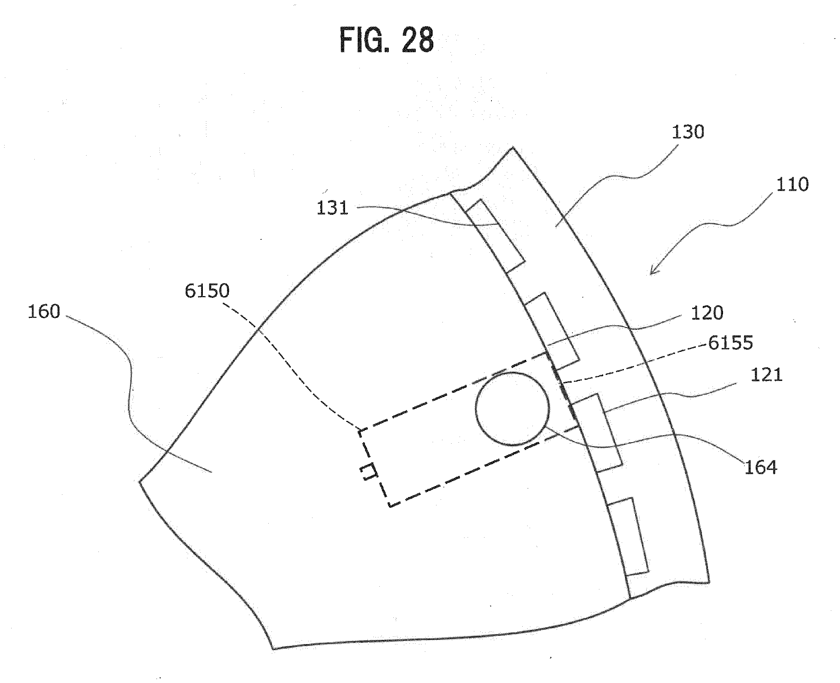

FIG. 25 is an external perspective view of a bobbin 6150 according to the present embodiment. FIG. 26 is a sectional view depicting a state in which a stator 6100 using bobbins 6150 according to the sixth embodiment of the present invention is placed in the molding die 600. FIG. 27 is an enlarged view of an A part in FIG. 30. FIG. 28 is a partial plan view of the stator 6100 according to the present embodiment.

The bobbin 6150 according to the present embodiment is different from the bobbin 150 according to the first embodiment in terms of the shape of a back yoke side part 6153a of a flange portion 6153. First, the back yoke side part 6153a does not have the slope 155 on the outside in the axial direction, but an outer surface in the axial direction of the flange portion 6153 extends. Second, an outer end surface 6155 on the outside in the radial direction of the stator core 110 in the back yoke side part 6153a is located more to the outside of the stator core 110 in the radial direction than an outermost inner circumferential wall 6341 of a gate 634 in the radial direction of the stator core 110. Therefore, as depicted in FIG. 28, the outer end surface 6155 is located more outward in the radial direction of the stator core 110 than a gate mark 164 formed on the surface of the resin 160. It is to be noted that while the embodiment has been illustrated in which the gate mark 164 is formed on the upper surface of the.resin 160, there is no limitation to this, but the gate mark 164 may be formed on, for example, a side surface as an inclined surface of the resin 160.

In addition, the outer end surface 6155 can be brought into close contact with an inner circumferential wall 6321 of the upper die 630. In this case, the outer end surface 6155 is exposed from the resin 160.

[Effect]

The position of a resin injection port (gate 634) of a mold (upper die 630) used at a time of the resin molding processing appears as a gate mark on the surface of the resin 160. In a case where the end surface on the outside in the radial direction of the stator core 110 in the back yoke side part 6153a (which end surface will hereinafter be referred to as an outer end surface) 6155 is located more outward in the radial direction of the stator core than the gate mark as in the present embodiment, the liquid resin 162 at the time of the resin molding processing is injected in the direction of the flange portion 6153 from a position more inward in the radial direction than the outer end surface 6155 of the back yoke side part 6153a. Therefore, the liquid resin.162 presses a surface 6156 on the outside in the axial direction as compared with the outer end surface 6155 of the back yoke side part 6153a. As a result, the back yoke side part (flange portion) can be easily pressed toward the stator core. Consequently, a clearance is prevented from being formed between the back yoke side part (flange portion) and the stator core. Thus, the intrusion of the resin between the stator core and the bobbin can be suppressed, so that a weakening of the electric connection of the connecting portion 141 due to a deformation of the coil 140 can be suppressed.

In addition, in a case where the outer end surface 6155 is in close contact with the inner circumferential wall 6321 of the upper die 630, the outer end surface 6155 is not covered by the resin 160, but is exposed from the resin 160. On the other hand, in this case, the outer end surface 6155 is not pressed by the liquid resin 162 injected from the gate 634 of the upper die 630. Hence, it is possible to suppress the intrusion of the resin between the stator core and the bobbin from between a lower portion of the end surface on the outside diameter side of the flange portion and the end surface in the axial direction of the back yoke. Consequently, a weakening of the electric connection of the connecting portion due to a deformation of the coil can be suppressed.

It is to be noted that the present invention is not limited to the foregoing embodiments, but includes various modifications. For example, the foregoing embodiments are described in detail to describe the present invention in an easily understandable manner, and are not necessarily limited to embodiments including all of the described configurations. In addition, a part of a configuration of a certain embodiment can be replaced with a configuration of another embodiment, and a configuration of another embodiment can be added to a configuration of a certain embodiment. In addition, for a part of a configuration of each embodiment, addition of another configuration, deletion, or substitution with another configuration is also possible.

Incidentally, an embodiment of the present invention may be the following mode. Specifically, an embodiment has been illustrated in which the rotating electric machine 1000 is a wave winding distributed winding radial gap type motor used as a power source of a compressor. However, there is no limitation to this. For example, the rotating electric machine 1000 may be applied as a generator rather than a motor. There is no limitation to the wave winding distributed winding, but another winding method may be adopted. The rotating electric machine 1000 may be used as a power source for an industrial machine such as an industrial robot, a press machine, or a hydraulic machine other than a compressor as well as an automobile, a household electric appliance, or the like.

In addition, a slot combination of the number of poles and the number of slots, the materials of the stator core and the resin, the shapes of the projecting portions and the flange portions of the bobbins, and the like are not limited to the foregoing embodiments.

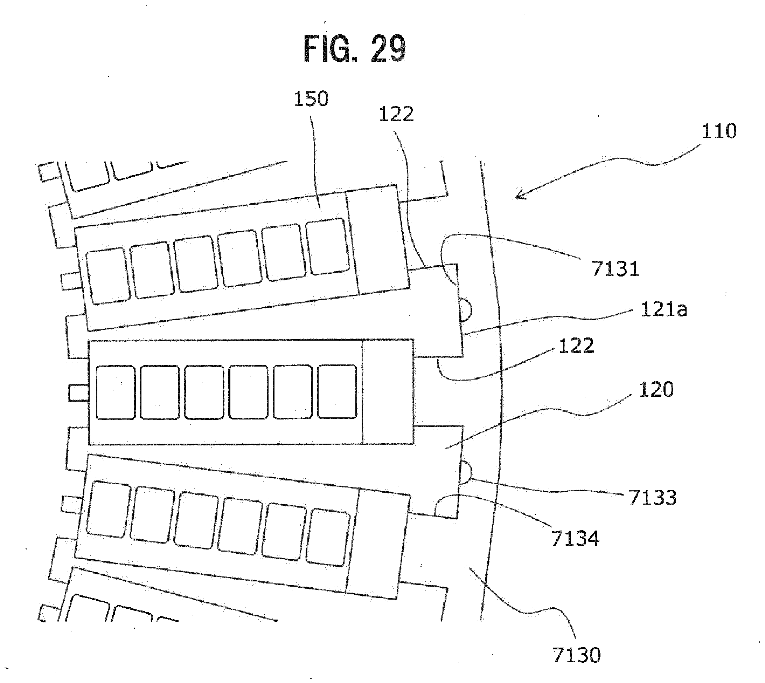

For example, as depicted in FIG. 29, a second recessed portion 7133 may be provided to the bottom surface of a first recessed portion 7131 of a back yoke 7130 which bottom surface faces a radially outward surface 121a of a tooth 120. Consequently, with the second recessed portion 7133 as a starting point, the liquid resin 162 is filled between the radially outward surface 121a of the teeth 120 and the bottom surface of the first recessed portion 7131 of the back yoke 7130. The liquid resin 162 pressurizes the tooth 120 inward in the radial direction. Thus, the side walls 122 of the tooth 120 in the circumferential direction of a stator core 7110 are pressed against circumferential direction side walls 7134 of the first recessed portion 7131 of the back yoke 7130. In the thus formed stator core 7110, the tooth 120 is further pressed inward in the radial direction, so that a clearance in the circumferential direction which clearance is formed between the recessed portion of the back yoke and one end of the tooth fitted in the recessed portion can be made smaller than a clearance therebetween in the radial direction. Therefore, a magnetic flux flowing within the tooth from another end of the tooth to the one end further flows from the one end of the tooth to the recessed portion of the back yoke in the circumferential direction. Consequently, a flow of the magnetic flux to the outside diameter side of the back yoke can be further suppressed, so that an iron loss occurring in the back yoke can be reduced more. In addition, by making the positions in the axial direction of the gate 634 of the molding die 600 and the second recessed portion 7133 overlap each other, it is possible to further fill the liquid resin between the radially outward surface 121a of the tooth 120 and the bottom surface of the first recessed portion 7131 of the back yoke 7130. Consequently, a flow of the magnetic flux to the outside diameter side of the back yoke can be further suppressed, so that an iron loss occurring in the back yoke can be reduced more.

In addition, while the above description has illustrated embodiments in which a stator core is divided into a back yoke and a plurality of teeth, there is no limitation to this. For example, a stator core may include a back yoke and teeth integral with each other.

In addition, while the above description has illustrated embodiments in which the teeth are formed as a trapezoidal column, there is no limitation to this. For example, a widening portion may be provided to distal ends of the teeth, and thereby the slots are semi-closed.

In addition, while.the resin is preferably a thermosetting resin, there is no limitation to this. It suffices for the resin to be a resin for pressure molding. The resin may be a thermoplastic resin. Incidentally, a resin exhibiting a small curing shrinkage and having a linear expansion coefficient close to that of an iron core is preferably used in order to reduce an effect exerted on the connecting portions of the coil.

Description of Reference Characters

      1000: Rotating electric machine
      100, 2100, 3100, 5100, 6100, 900: Stator
      110, 7110: Stator core
      111: Slot
      112: Opening portion
      120: Teeth
      122: Side wall
      130, 7130: Back yoke
      131: Recessed portion
      132: Inner wall
      140: Coil
      141: Connecting portion
      142: First rectangular wire
      142a: Projecting portion
      143: Second rectangular wire
      143a: Groove portion
      144: Coil end
      150, 2150, 3150, 4150, 5150: Bobbin
      151, 4151: Tubular portion
      151a: First side wall
      151b: Second side wall
      151c: Third side wall
      152, 3152, 4152, 5152: Projecting portion
      153, 2153, 4153, 5153, 953: Flange portion
      153a, 6153a, 953a: Back yoke side part
      153b, 2153b, 5153b: Tooth side part

155, 2156: Surface on the outside in an axial direction, slope
6155: Outer end surface
160: Resin
161, 3161, 4161, 5161: Axial direction flow passage
162: Liquid resin
163: Radial direction flow passage
164: Gate mark
200: Rotor
600: Molding die
610: Core die
620: Lower die
630: Upper die
634: Injection port (gate)
710: Upper cavity
720: Lower cavity

**Claims**

1. A rotating electric machine comprising:

    a rotor;
    a stator core having a slot provided with an opening portion on a side of the rotor;
    a bobbin that is fitted into the slot, and into which a coil is inserted;
    a projecting portion disposed on a side of the opening portion in the bobbin; and
    a resin that fixes the stator core, the coil, and the bobbin to each other.

2. The rotating electric machine according to claim 1, wherein
   the projecting portion is a ridge that extends from one end to another end in an axial direction of the slot.

3. The rotating electric machine according to claim 2, wherein
   the projecting portion is two ridges that extend along side surfaces of two teeth sandwiching the slot.

4. The rotating electric machine according to claim 1, wherein

    the bobbin includes a tubular portion into which the coil is inserted and a flange portion provided to at least one of end portions in an axial direction of the tubular portion,
    the flange portion includes a back yoke side part that covers a part of an end surface in the axial direction of a back yoke located radially outward of the slot, and
    a face on an outside in an axial direction in the back yoke side part is a slope with a rising gradient from an outside to an inside in a radial direction of the stator core.

5. The rotating electric machine according to claim 4, wherein

    the flange portion includes two tooth side parts that cover parts of end surfaces in the axial direction of two respective teeth sandwiching the slot from a circumferential direction, and
    a face on the outside in the axial direction of each of the two tooth side parts is a slope with a rising gradient from an end surface in the axial direction of the two teeth to the slot.

6. The rotating electric machine according to claim 1, wherein

    the bobbin includes a tubular portion into which the coil is inserted and a flange portion provided to at least one of end portions in an axial direction of the tubular portion, and
    the projecting portion is provided to an external wall on the opening portion side in the flange portion.

7. The rotating electric machine according to claim 1, wherein

    the bobbin includes a tubular portion into which the coil is inserted and a flange portion provided to at least one of end portions in an axial direction of the tubular portion,
the flange portion includes two tooth side parts that cover a part of an end surface in the axial direction of each of two teeth sandwiching the slot from a circumferential direction of the stator core, and
the projecting portion is provided to an external wall on the opening portion side in each of the two tooth side parts.

8. The rotating electric machine according to claim 7, wherein
the projecting portion is two ridges that are located at both ends of the flange portion in the circumferential direction of the stator core, and project radially inward of the stator core.

9. The rotating electric machine according to claim 1, wherein

the bobbin includes a tubular portion into which the coil is inserted and a flange portion provided to at least one of end portions in an axial direction of the tubular portion,
the flange portion includes a back yoke side part that covers a part of an end surface in the axial direction of a back yoke located radially outward of the slot and two tooth side parts that cover parts of end surfaces in the axial direction of each of two teeth sandwiching the slot from a circumferential direction of the stator core, and
a length for which the back yoke side part extends from the tubular portion in a radial direction of the stator core is longer than a length for which each of the two tooth side parts extends from the tubular portion in the circumferential direction of the stator core.

10. The rotating electric machine according to claim 9, wherein
an outer end surface in the radial direction of the stator core in the back yoke side part is located more outward in the radial direction of the stator core than a gate mark formed on a surface of the resin.

11. The rotating electric machine according to claim 10, wherein
the outer end surface in the radial direction of the stator core in the back yoke side part is exposed from the resin.

12. The rotating electric machine according to claim 1, wherein

the coil includes a plurality of segment conductors, and
the plurality of segment conductors are connected to each other within the bobbin.

13. The rotating electric machine according to claim 12, wherein
the plurality of segment conductors include

a first rectangular wire having a projecting portion at one end of the first rectangular wire,
a second rectangular wire having a groove portion at one end of the second rectangular wire, and
a connecting portion in which the projecting portion is fitted into the groove portion.

14. The rotating electric machine according to claim 1, wherein

the stator core includes a back yoke in a cylindrical shape, the back yoke being located radially outward of the slot, a recessed portion provided to an inner circumferential surface of the back yoke and extending in an axial direction of the back yoke, and a tooth having one end fitted to the recessed portion, and
the resin is filled into a clearance in a radial direction formed between the recessed portion and the one end of the tooth.

15. An industrial machine comprising the rotating electric machine according to claim 1.

FIG. 1

FIG. 2

# FIG. 3

FIG. 4

EP 4 418 502 A1

FIG. 5

# FIG. 6

EP 4 418 502 A1

# FIG. 7

d1 < d2

EP 4 418 502 A1

# FIG. 8

EP 4 418 502 A1

FIG. 9

FIG. 10

142

141

143

142

142a

143a

143

# FIG. 11

FIG. 12

FIG. 13

FIG. 14

FIG. 15

FIG. 16

# FIG. 17

EP 4 418 502 A1

FIG. 18

EP 4 418 502 A1

FIG. 19

# FIG. 20

EP 4 418 502 A1

FIG. 21

EP 4 418 502 A1

# FIG. 22

EP 4 418 502 A1

# FIG. 23

FIG. 24

# FIG. 25

FIG. 26

EP 4 418 502 A1

# FIG. 27

FIG. 28

EP 4 418 502 A1

EP 4 418 502 A1

## FIG. 29

## INTERNATIONAL SEARCH REPORT

| International application No. |
| --- |
| **PCT/JP2022/022678** |

| A. | CLASSIFICATION OF SUBJECT MATTER |
| --- | --- |

*H02K 3/34*(2006.01)i
FI:   H02K3/34 C; H02K3/34 D

According to International Patent Classification (IPC) or to both national classification and IPC

| B. | FIELDS SEARCHED |
| --- | --- |

Minimum documentation searched (classification system followed by classification symbols)

H02K3/34

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2020/017133 A1 (HITACHI LTD) 23 January 2020 (2020-01-23)<br>paragraphs [0021]-[0043], [0081]-[0091], fig. 1-2, 8-10 | 1-3, 6-13, 15 |
| A | | 4-5, 14 |
| Y | JP 2007-336650 A (TOYOTA MOTOR CORP) 27 December 2007 (2007-12-27)<br>paragraphs [0070]-[0071], fig. 4-7 | 1-3, 6-13, 15 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **02 August 2022** | **16 August 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/022678**

| Patent document cited in search report | | | Publication date (day/month/year) | Patent family member(s) | | | Publication date (day/month/year) |
|---|---|---|---|---|---|---|---|
| WO | 2020/017133 | A1 | 23 January 2020 | CN | 112368912 | A | |
| JP | 2007-336650 | A | 27 December 2007 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020017133 A